# FASCICULE DE BREVET EUROPEEN

(11) **EP 2 387 448 B1**
(45) Date de publication et mention de la délivrance du brevet: **16.01.2013**
(21) Numéro de dépôt: 09768117.5
(22) Date de dépôt: 26.11.2009
(51) Int. Cl.: B01D 53/14, C10G 11/18

(54) **NOUVEAU PROCEDE DE RECUPERATION DU CO2 ISSU DES FUMEES DE REGENERATION D'UNE UNITE DE CRAQUAGE CATALYTIQUE**
NEUES VERFAHREN ZUR RÜCKGEWINNUNG VON CO2 AUS DEN REGENERATIONSDÄMPFEN EINER ANLAGE ZUM KATALYTISCHEN CRACKEN
NOVEL METHOD FOR RECOVERING CO2 FROM THE REGENERATION FUMES OF A CATALYTIC CRACKING UNIT

(30) Priorité: 16.12.2008 FR 0807054
(43) Date de publication de la demande: 23.11.2011
(73) Titulaire: IFP Energies nouvelles, 92852 Rueil-Malmaison Cedex (FR)
(72) Inventeur: FEUGNET, Frederic, F-69001 Lyon (FR); DIGNE. Romina, F-69007 Lyon (FR); BOUILLON, Pierre-Antoine, F-69003 Lyon (FR); LEMAIRE, Eric, F-69480 Anse (FR)
(86) Numéro de dépôt international: PCT/FR2009/001346
(87) Numéro de publication internationale: WO 2010/070212

(56) Documents cités:
- EP-A1- 0 105 939
- EP-A1- 1 676 901
- EP-A1- 1 813 343
- EP-A1- 1 935 966
- US-A- 4 143 521
- US-A- 4 163 652
- US-A- 5 424 043
- US-A1- 2007 169 492
- US-A1- 2008 081 938

## Description

### DOMAINE DE L'INVENTION

La présente invention se situe dans le domaine de la captage du dioxyde de carbone émis par des fumées provenant de la régénération des unités de craquage catalytique ( notées en abrégé FCC).

Les unités de craquage catalytique génèrent en effet des fumées de combustion en provenance de la régénération du catalyseur réalisée dans un réacteur, appelé régénérateur, à un ou deux étages. Lorsque la régénération est effectuée en deux étages, le premier étage travaille en défaut d'air et réalise une combustion à température contrôlée, tandis que le second étage travaille en excès d'air et la température des fumées en sortie peut atteindre 800°C.

La présente invention s'applique aussi bien au cas d'une régénération en un seul étage qu'au cas d'une régénération en deux étages.

La captage du CO2 contenu dans ces fumées de combustion est réalisée au moyen d'une unité de traitement aux amines dont on pourra trouver une description détaillée notamment dans le brevet US 7056482.

Dans la suite du texte on parle de procédé intégré pour désigner le procédé selon la présente invention dans la mesure où ce procédé intégré réalise un couplage thermique entre l'unité de craquage catalytique, excédentaire en calories et l'unité de traitement des fumées aux amines qui a besoin de calories pour réaliser la régénération de ladite amine.

Dans la suite du texte l'unité de craquage catalytique sera désignée par son abréviation commune de FCC ( Fluid Catalytic Cracking), et l'unité de traitement des fumées aux amines sera appelée par simplification unité aux amines, ou quelquefois unité de traitement des fumées.

### EXAMEN DE L'ART ANTERIEUR

Le captage du CO2 est un aspect essentiel dans la lutte contre l'effet de serre dont il est un des responsables principaux. Afin de limiter le phénomène de réchauffement climatique, le dioxyde de carbone est extrait des fumées de combustion en vue d'être séquestré, par exemple dans un réservoir souterrain. Les rejets de dioxyde de carbone proviennent pour la plus grande partie de l'activité industrielle (60% en moyenne mondiale, dont 40% en provenance des fumées des centrales thermiques pour la production électrique). En général, dans les raffineries, l'unité de craquage catalytique en lit fluidisé (FCC) peut être considérée comme une des plus émettrices de CO2 avec près de 20% des émissions à elle seule, les autres sources se trouvant dans les divers fours de réchauffage ou de distillation.

Afin de réduire les émissions de CO2 d'une raffinerie, il apparaît clairement que le FCC est une cible privilégiée. La présente invention propose une solution faisant appel à une technologie de captage connue, dite captage par les amines, mais développe une intégration thermique poussée avec l'unité de FCC de sorte qu'il est possible de parler de procédé intégré FCC/unité de captage aux amines. De plus, l'invention permet de mettre en évidence qu'il est possible de traiter une fraction des fumées de l'unité de FCC allant de 50 à 100%, avec un taux de captage global du CO2 qui, dans tous les cas, est supérieur à 46% et peut même dans certains cas atteindre 95%.

L'art antérieur en matière de captage de CO2 fait état de procédés d'absorption mettant en oeuvre une solution aqueuse d'amine, pour extraire le CO₂ et l'H₂S d'un gaz. Le gaz est purifié par mise en contact avec la solution absorbante, puis la solution absorbante est régénérée thermiquement.

Un procédé de traitement de gaz aux amines comprend généralement les étapes suivantes:
- a) on met en contact le gaz à traiter avec une solution absorbante comportant des amines en solution aqueuse de manière à obtenir un gaz appauvri en composés acides et comportant des traces d'amines, et une solution absorbante enrichie en composés acides,
- b) on régénère au moins une fraction de la solution absorbante enrichie en composés acides dans une colonne de régénération de manière à obtenir une solution absorbante régénérée et un effluent gazeux riche en composés acides, la solution absorbante régénérée étant recyclée à l'étape a) en tant que solution absorbante,
- c) on condense partiellement par refroidissement ledit effluent gazeux pour obtenir un effluent refroidi composé de condensats liquides et d'un gaz enrichi en composés acides, puis on introduit au moins une partie des condensats dans la colonne de régénération,
- d) on met en contact dans une section de lavage le gaz appauvri en composés acides obtenu à l'étape a) avec un flux d'eau liquide de manière à obtenir un gaz appauvri en amine et une eau enrichie en amine,
- e) on recycle une partie de l'eau enrichie en amine obtenue en fond de la section de lavage, en effectuant au moins l'une des opérations suivantes:
   o on mélange ladite partie de l'eau enrichie en amine avec la solution absorbante régénérée obtenue à l'étape b),
   o on introduit ladite partie de l'eau enrichie en amine dans la colonne de régénération,
   o on mélange ladite partie de l'eau enrichie en amine avec l'effluent gazeux obtenu à l'étape b),
   o on mélange ladite partie de l'eau enrichie en amine avec la solution absorbante enrichie en composés acides obtenue à l'étape a).

La régénération de la solution absorbante effectuée à l'étape b) peut être réalisée par chauffage à la vapeur. Ladite vapeur est classiquement générée dans une chaudière qui peut brûler tout type de combustible, du charbon au gaz naturel.
Bien entendu, lorsque la génération de vapeur est effectuée par la combustion d'un combustible fossile, il convient de comptabiliser le CO₂ émis à cette étape dans le bilan CO₂ global de l'unité amine. De manière assez grossière, mais pour fixer les idées, dans les technologies actuelles de traitement aux amines, pour une tonne de CO2 absorbée il faut compter environ 0,4 tonne de CO2 produit par la combustion liée à la régénération de la solution absorbante.

### DESCRIPTION SOMMAIRE DES FIGURES

La figure 1 représente un schéma de procédé selon l'art antérieur dans lequel l'unité de FCC présente un excédent de calories et l'unité de traitement aux amines est associée à une chaudière qui lui apporte les calories nécessaires à la régénération de l'amine.
La figure 2 représente un schéma du procédé selon l'invention dans lequel les calories nécessaires à la régénération de l'amine sont intégralement apportées par la vapeur, ou tout autre fluide pouvant jouer le rôle de vecteur thermique, généré au niveau de l'unité de FCC.

### DESCRIPTION SOMMAIRE DE L'INVENTION

La présente invention peut se définir comme un procédé intégré de traitement d'une partie au moins des fumées d'une unité de craquage catalytique en vue de la récupération du CO2 contenu dans lesdites fumées, le dit traitement consistant en une absorption du CO2 dans une solution aqueuse d'amines, les calories nécessaires à la régénération de l'amine étant intégralement apportées par de la vapeur, ou tout autre fluide vecteur, généré au niveau de l'unité de FCC.

De manière générale, l'excédent de calories obtenu au niveau de l'unité de FCC provient d'un échangeur générant de la vapeur en utilisant comme fluide chaud une partie du catalyseur prélevé en un ou plusieurs points de la zone de régénération de l'unité de FCC.

Le catalyseur refroidi est réintroduit dans la zone de régénération en un point distinct du point de prélèvement.

Il existe en principe d'autres sources d'énergie dans une unité FCC (refroidissement des fumées, fractionnement principal), mais l'énergie récupérée au niveau de ces autres sources est en général totalement utilisée au sein même de l'unité FCC (compresseurs, consommation de vapeur). On considère donc dans la présente invention que l'énergie disponible au FCC provient de l'échangeur externe placé en dérivation de la zone de régénération.

Dans les unités de FCC la régénération du catalyseur est généralement réalisée au moyen de deux étages de régénération, un premier étage travaillant en défaut d'air ce qui permet de limiter la température du catalyseur à environ 650/700°C, et un second étage travaillant en excès d'air, et dans lequel la température du catalyseur peut atteindre ou dépasser 800°C.

Chacun des étages de régénération fonctionne en lit fluidisé à des vitesses de fluidisation comprises entre 30 cm/s et 1 m/s. Les deux étages sont reliés par une zone tubulaire permettant de transporter en lit entraîné le catalyseur du premier étage vers le second étage.

Dans le cas d'une régénération en deux étages, le catalyseur chaud est généralement prélevé au niveau du second étage ( fonctionnant aux environs de 800°C) et réintroduit en un point du premier étage ( fonctionnant aux environs de 650°C).

Lorsque la régénération est effectuée au moyen d'un seul étage de régénération, le catalyseur est prélevé en un point dudit étage et réintroduit en un autre point dudit étage, distinct du précédent.

Les fumées issues des réacteurs de régénération du catalyseur contiennent des particules solides, du monoxyde de carbone (CO), des oxydes d'azote (NOx) et de soufre (SOx). Elles sont donc envoyées dans une section de traitement des fumées avant d'être envoyées à l'unité de traitement aux amines. Une section de traitement des fumées peut comprendre les éléments suivants :
■ un ou plusieurs séparateurs gaz/solide additionnels pour éliminer d'avantage de particules de catalyseur,
■ une turbine d'expansion pour convertir l'énergie de pression en électricité,
■ un incinérateur de CO pour convertir le CO en CO2,
■ une unité dite "De-NOx" pour réduire la teneur en oxydes d'azote des fumées,
■ un refroidisseur des fumées pour récupérer la chaleur des fumées et ainsi produire de la vapeur,
■ une unité d'épuration (appelée "scrubber" en anglais) pour réduire la teneur en particules et en oxydes de soufre des fumées.

L'échangeur externe dans lequel se réalise le transfert de calories entre le catalyseur chaud et le fluide généré, le plus souvent de la vapeur HP, est un dispositif connu de l'art antérieur sous le nom de "cat cooler", consistant essentiellement en un faisceau d'échange immergé dans le catalyseur chaud à l'état fluidisé. On peut également envisager de produire de la vapeur basse pression ( inférieure à 8 bars) au niveau de cet échangeur, vapeur préférée pour régénérer l'amine, la vapeur ayant alors une température inférieure à 160°C.

La présente invention n'est pas liée à la technologie de l'échangeur externe, ni au mode de régénération en un ou deux étages. Elle peut en outre s'appliquer à tout ou partie des fumées de la zone de régénération. On peut envisager par exemple de ne traiter que les fumées issues d'un seul étage de régénération, soit l'intégralité des fumées issues du premier étage, soit l'intégralité des fumées issues du second étage.

De la même manière, la présente invention est compatible avec toutes les technologies de l'unité de traitement aux amines.

Dans le procédé intégré de captage du CO2 émis par les fumées d'une unité de FCC selon l'invention, l'unité de craquage catalytique peut travailler dans des conditions de sévérité élevées, c'est à dire un rapport C/O entre 4 et 15, et préférentiellement compris entre 5 et 10, et avec une température de sortie de l'élévateur comprise entre 510 et 580°C, préférentiellement comprise entre 520°C et 570°C.

Dans le procédé intégré de captage du CO2 émis par les fumées d'une unité de FCC selon l'invention, la charge hydrocarbonée traitée à l'unité de craquage catalytique peut avoir un résidu de carbone Conradson compris entre 6 et 10.

Enfin le procédé intégré de captage du CO2 émis par les fumées d'une unité de FCC selon la présente invention, permet d'envoyer une proportion des fumées issues de la régénération de l'unité de craquage catalytique vers l'unité aux amines supérieure à 50% poids.

L'amine mis en oeuvre dans l'unité de traitement aux amines est généralement choisie dans le groupe suivant: MEA (monoéthanolamine), DEA (diéthanolamine), MDEA (diméthyléthanolamine), DIPA (diisopropylamine), DGA (diglycolamine), des diamines, de la pipérazine, de l'hydroxyéthyl piperazine, TMHDA (tétraméthylhexane-1,6-diamine).

De manière préférée on choisit l'amine dans le groupe formé par MEA (monoéthanolamine), DEA (diéthanolamine), MDEA (diméthyléthanolamine), et de manière très préférée on choisit l'amine MEA (monoéthanolamine).

Enfin le procédé intégré de captage du CO2 émis par les fumées d'une unité de FCC selon l'invention peut faire appel dans l'unité de traitement aux amines au composé absorbant Tétraméthylhexane-1,6-diamine, couramment nommé TMHDA.

### DESCRIPTION DETAILLEE DE L'INVENTION

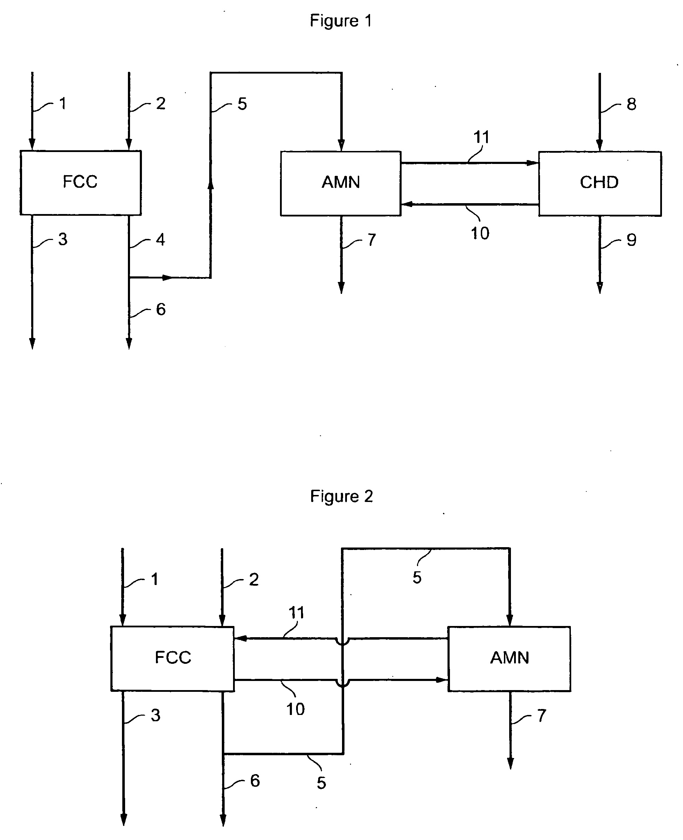

Le procédé selon la présente invention sera mieux compris par la comparaison de la figure 1 selon l'art antérieur et de la figure 2 selon la présente invention.

Les abréviations entre parenthèse renvoient aux unités, et les numéros entre parenthèse renvoient aux flux entrant ou sortant desdites unités.

La figure 1 est un schéma de procédé faisant appel à une unité de craquage catalytique (FCC) et une unité de traitement aux amines (AMN) des fumées issues de la section de régénération de la dite unité de craquage catalytique (FCC). L'unité de traitement des fumées aux amines est associée à une chaudière (CHD) qui fournit les calories nécessaires à la régénération de l'amine.

L'unité de craquage catalytique est alimentée par une charge hydrocarbonée de type distillat sous vide ou résidu atmosphérique (1) et fournit des produits qui sont essentiellement des gaz en C1,C2,C3, une coupe essence, une coupe gazole, une coupe lourde dite "slurry", et une certaine quantité de coke déposé sur le catalyseur. C'est ce coke qui est brûlé dans la zone de régénération alimentée par de l'air (2) et qui produit des fumées de combustion constituées principalement de CO2, d'H2O et de CO. Les fumées de combustion sont envoyées dans une section de traitement des fumées afin de brûler le CO en CO2 et afin de réduire les teneurs en particules et oxydes d'azote et de soufre dans les fumées. Ensuite, une partie (5) ou l'intégralité des fumées traitées (4) est envoyée dans l'unité de traitement aux amines (AMN). Le traitement des fumées au niveau de l'unité FCC peut être ajusté afin de respecter certaines contraintes en entrée du traitement aux amines, comme par exemple la teneur en NOx et SOx.

L'unité aux amines nécessite des calories pour régénérer l'amine qui sont apportées par la chaudière (CHD) alimentée par les flux de comburant et de combustible (8) et qui génère un flux de vapeur (10). La vapeur condensée (11) est renvoyée vers la chaudière ( CHD) selon un cycle bien connu de l'homme du métier.

La figure 2 selon l'invention se décrit de la même manière que la figure 1 mais ne présente plus de chaudière associée à l'unité de traitement aux amines (AMN). Les calories nécessaires à la régénération de l'amine sont apportées intégralement par la vapeur (10) générée au niveau de l'unité de craquage catalytique (FCC) au moyen de l'échangeur externe ( non représenté sur la figure 2).

On trouvera une description de ce type d'échangeur par exemple dans le brevet US 5324696. Selon l'invention, l'unité aux amines ne traite pas nécessairement l'intégralité des fumées émises par le FCC. La proportion de fumées traitées à l'unité aux amines dépend de plusieurs facteurs, le principal d'entre eux étant la production de coke de l'unité FCC.

Plus la charge est lourde, (ce qui s'exprime par son taux de carbone Conradson, noté CCR et mesuré selon la norme ASTM D 189), plus le catalyseur est chargé en coke à l'issue de la réaction, et plus la régénération du catalyseur génère de calories récupérées par l'échangeur externe. Parallèlement la quantité de CO2 dans les fumées est également augmentée.

Or, en raison de l'évolution des bruts disponibles, une tendance de fond du FCC est le traitement de charges de plus en plus lourdes qui sont à présent couramment des charges ayant un résidu de carbone Conradson de 8 à 10. La présente invention est en ce sens parfaitement en ligne avec l'évolution du craquage catalytique et permet une valorisation particulièrement intéressante des calories générées à l'échangeur externe.

Une autre évolution du FCC est celle connue sous le terme de FCC pétrochimique, car elle consiste à faire fonctionner le FCC dans des conditions favorisant la production de propylène. Ces conditions de fonctionnement sont des conditions sévères correspondant à des rapports C/O compris entre 4 et 15, et des températures de sortie de l'élévateur supérieures à 550°C. Ces conditions de fonctionnement s'accompagnent d'une augmentation de la teneur en coke déposé sur le catalyseur à l'issue de la réaction, donc d'une augmentation des calories disponibles à l'échangeur externe. La encore, la présente invention est parfaitement en ligne avec cette seconde évolution des unités de FCC.

Les exemples qui suivent sont destinés à montrer qu'il est possible de traiter entre 51% et 94% des fumées de régénération de l'unité de FCC en vue de la récupération du CO2, en utilisant uniquement les calories disponibles à l'échangeur externe.

### EXEMPLES

### Exemple 1

Dans cet exemple, nous avons simulé le craquage catalytique d'un résidu atmosphérique (arabe lourd) dans une unité FCC comportant un échangeur externe.

Les caractéristiques de fonctionnement et les principaux rendements de l'unité de craquage catalytique sont indiqués dans le tableau 1 ci-dessous.

**Tableau 1 (caractéristiques de l'unité FCC)**

| | | |
|---|---|---|
| Débit de charge élévateur principal | 161 | t/h |
| Température de sortie du élévateur principal | 550 | °C |
| Température régénérateur 1 | 654 | °C |
| Température régénérateur 2 | 710 | °C |
| Chaleur échangée à l'échangeur externe | 26,8 | MW |
| Rapport C/O | 8,0 | |
| Rendement en gaz secs | 7,3 | % poids |
| Rendement en propylène | 7,2 | % poids |
| Rendement en essence (C5- 220°C) | 41,9 | % poids |
| Rendement en coke | 9,5 | % poids |
| Débit de CO₂ produit par l'unité FCC | 49,5 | t/h |
| Puissance thermique de l'échangeur externe | 26,8 MW | |
| Excédent énergétique | + 23,6 MW | |

La puissance réellement disponible à l'échangeur externe ( 23,6 MW) n'est que de 88% de la puissance théorique (26,8 MW) en raison de divers postes de consommation.

Le tableau 2 compare l'émission globale de CO2 des procédés selon l'art antérieur (figure 1) et selon l'invention (figure 2).

**Tableau 2 (comparaison de l'art antérieur et de l'invention)**

| | Unité | Selon l'art antérieur (figure 1) | Selon l'invention (figure 2) |
|---|---|---|---|
| Débit de CO₂ généré par le FCC n'entrant pas dans l'unité amine (flux 6) | t/h | 24,1 | |
| Débit de CO₂ entrant dans l'unité amine (flux 5) | t/h | 25,4 | |
| Taux d'absorption de CO₂ dans l'amine | % | 90 | |
| Débit de CO₂ rejeté dans l'atmosphère (flux 7) | t/h | 2,5 | |
| Puissance nécessaire pour régénérer l'amine | MW | 23,6 | |
| Débit de CO₂ rejeté dans l'atmosphère dû à la chaudière (flux 9) | t/h | 9,0 | 0,0 |
| Débit total de CO₂ rejeté dans l'atmosphère | t/h | 35,6 | 26,6 |

Pour régénérer l'amine, l'unité de traitement aux amines dispose de vapeur produite par une chaudière à charbon selon l'art antérieur, et produite par l'échangeur externe de l'unité FCC pour le procédé selon l'invention.

La puissance thermique nécessaire pour régénérer l'amine est la même selon l'art antérieur et selon l'invention puisque les unités FCC et de traitement aux amines sont identiques.

La puissance thermique nécessaire à la régénération de l'amine est égale à l'excédent énergétique de l'unité FCC. Dans cet exemple cas, 51% des fumées du FCC sont traitées dans l'unité amine.

La chaudière associée à l'unité aux amines génère des fumées de combustion dont 9 t/h de CO2,
auquel il convient d'ajouter la fraction de CO2 non traitée issues des fumées de l'unité de craquage (24,1 t/h) et le rejet de CO2 de l'unité aux amines (2,5 t/h) lié à son rendement d'absorption (90%).

Au total, 35,6 t/h de CO₂ sont rejetés dans l'atmosphère dans le procédé selon l'art antérieur, soit 72% du CO₂ produit par l'unité FCC.

Dans le procédé selon l'invention, seulement 26,6 t/h de CO₂ sont rejetés dans l'atmosphère, soit 54% du CO₂ produit par l'unité FCC. Le débit total de CO₂ rejeté dans l'atmosphère est donc réduit de 25% dans le procédé selon l'invention par rapport à ce qu'il serait dans un procédé avec chaudière pour la régénération de l'amine selon l'art antérieur.

### Exemple 2

Dans cet exemple, nous avons simulé le craquage catalytique du même résidu atmosphérique que celui de l'exemple 1, mais avec un catalyseur moins sélectif en coke. Les conditions opératoires du FCC sont très proches de l'exemple 1.

Les caractéristiques de fonctionnement et les principaux rendements sont indiqués dans le tableau 3 ci-dessous.

**Tableau 3 (caractéristiques unité FCC)**

| | | |
|---|---|---|
| Débit de charge élévateur principal | 161 | t/h |
| Température de sortie élévateur principal | 550 | °C |
| Température régénérateur 1 | 655 | °C |
| Température régénérateur 2 | 711 | °C |
| Chaleur échangée à l'échangeur externe | 54,7 | MW |
| Rapport C/O | 7,8 | |
| Rendement en gaz secs | 7,3 | % poids |
| Rendement en propylène | 6,9 | % poids |
| Rendement en essence (C5- 220°C) | 39,9 | % poids |
| Rendement en coke | 12,1 | % poids |
| Débit de CO₂ produit par l'unité FCC | 63,4 | t/h |
| Puissance thermique de l'échangeur externe | 54,7 MW | |
| Excédent énergétique | + 55,3 MW | |

Le tableau 4 compare l'émission globale de CO2 des procédés selon l'art antérieur (figure 1) et selon l'invention (figure 2).

**Tableau 4 (comparaison de l'art antérieur et de l'invention)**

| | Unité | Selon l'art antérieur (figure 1) | Selon l'invention (figure 2) |
|---|---|---|---|
| Débit de CO₂ généré par le FCC n'entrant pas dans l'unité amine (flux 6) | t/h | 3,9 | |
| Débit de CO₂ entrant dans l'unité amine (flux 5) | t/h | 59,5 | |
| Taux d'absorption de CO₂ dans l'amine | % | 90 | |
| Débit de CO₂ rejeté dans l'atmosphère (flux 7) | t/h | 5,9 | |
| Puissance nécessaire pour régénérer l'amine | MW | 55,3 | |
| Débit de CO₂ rejeté dans l'atmosphère dû à la chaudière (flux 9) | t/h | 20,9 | 0,0 |
| Débit total de CO₂ rejeté dans l'atmosphère | t/h | 30,7 | 9,8 |

Pour régénérer l'amine, l'unité de traitement aux amines dispose de vapeur produite par une chaudière à charbon selon l'art antérieur, et produite par l'échangeur externe de l'unité FCC pour le procédé selon l'invention.

La puissance thermique nécessaire pour régénérer l'amine est la même selon l'art antérieur et selon l'invention puisque les unités FCC et traitement aux amines sont identiques.

Cette puissance thermique est égale à l'excédent énergétique de l'unité FCC. Dans cet exemple, 94% des fumées du FCC sont traitées dans l'unité amine.

La chaudière associée à l'unité aux amines génère des fumées de combustion dont 20,9 t/h de CO2 auquel il convient d'ajouter la fraction de CO2 non traitée issues des fumées de l'unité de craquage (3,9 t/h) et le rejet de CO2 de l'unité aux amines (5,9 t/h) lié à son rendement d'absorption (90%). Au total, 30,7 t/h de CO₂ sont rejetés dans l'atmosphère dans le procédé selon l'art antérieur, soit 48% du CO₂ produit par l'unité FCC.

Dans le procédé selon l'invention, seulement 9,8 t/h de CO₂ sont rejetés dans l'atmosphère, soit 15% du CO₂ produit par l'unité FCC. Le débit total de CO₂ rejeté dans l'atmosphère est donc réduit de 68% dans le procédé selon l'invention par rapport à ce qu'il serait dans un procédé avec chaudière pour la régénération de l'amine selon l'art antérieur.

Le tableau 5 ci-dessous présente le récapitulatif des exemples.

**Tableau 5 (récapitulatif des exemples)**

| Exemple | 1 | | 2 | |
|---|---|---|---|---|
| | Selon l'art antérieur | Selon l'invention | Selon l'art antérieur | Selon l'invention |
| % de fumées du FCC traitées dans l'unité aux amines | 51% | 51% | 94% | 94% |
| Rejet global de CO₂ (t/h) | 35,6 | 26,6 | 30,7 | 9,8 |
| Taux de captage du CO₂ produit par le FCC | 28% | 46% | 52% | 85% |

Le tableau récapitulatif 5 montre clairement qu'avec le schéma selon l'invention, on augmente très nettement le taux de captage du CO2 émis par les fumées de régénération de l'unité de craquage catalytique, par rapport au schéma de l'art antérieur en faisant de plus l'économie de l'équipement ( four ou chaudière) fournissant les calories nécessaires à la régénération de l'amine.

## Revendications

1. Procédé intégré de captage du CO2 émis par une partie au moins des fumées issues de la zone de régénération d'une unité de craquage catalytique (FCC) traitant une coupe hydrocarbonée de type distillat sous vide ou résidu atmosphérique, de carbone conradson (CCR) compris entre 6 et 10, dans des conditions de sévérité élevées, c'est à dire un rapport C/O entre 5 et 10, et avec une température de sortie de l'élévateur comprise entre 520°C et 570°C, ledit procédé faisant appel à une unité de traitement aux amines desdites fumées, ladite unité de traitement aux amines utilisant une amine choisie dans le groupe suivant: MEA (monoéthanolamine), DEA (diéthanolamine), MDEA (diméthyléthanolamine), procédé dans lequel l'unité de craquage catalytique est équipée d'un échangeur externe utilisant comme fluide chaud une partie du catalyseur prélevé dans la zone de régénération, les calories nécessaires à l'unité de traitement aux amines étant apportées intégralement par l'unité de craquage catalytique en utilisant la vapeur générée par ledit échangeur externe.

2. Procédé intégré de captage du CO2 émis par les fumées d'une unité de FCC selon la revendication 1, dans lequel la proportion des fumées issues de la régénération de l'unité de craquage catalytique traitée par l'unité de traitement aux amines est supérieure à 50% poids.

3. Procédé intégré de captage du CO2 émis par les fumées d'une unité de FCC selon la revendication 1, dans lequel l'unité de traitement aux amines utilise la MEA (monoéthanolamine).

4. Procédé intégré de captage du CO2 émis par les fumées d'une unité de FCC selon la revendication 1, dans lequel l'unité de traitement aux amines utilise le composé absorbant Tétraméthylhexane-1,6-diamine, couramment nommé TMHDA.

5. Procédé intégré de captage du CO2 émis par les fumées d'une unité de FCC selon la revendication 1, dans lequel la vapeur générée à l'échangeur externe associé à l'unité de FCC est une vapeur basse pression ( inférieure à 8 bars) ayant une température inférieure à 160°C.

6. Procédé intégré de captage du CO2 émis par les fumées d'une unité de FCC selon la revendication 1, dans lequel les fumées envoyées à l'unité de traitement aux amines proviennent du premier étage de la zone de régénération de l'unité de craquage catalytique.

7. Procédé intégré de captage du CO2 émis par les fumées d'une unité de FCC selon la revendication 1, dans lequel les fumées envoyées à l'unité de traitement aux amines proviennent du deuxième étage de la zone de régénération de l'unité de craquage catalytique.

## Claims

1. An integrated process for capturing CO₂ emitted by at least a portion of the flue gas coming from the regeneration zone of a catalytic cracking unit (FCC) treating a vacuum distillate or atmospheric residue type hydrocarbon cut with a Conradson carbon residue (CCR) in the range 6 to 10, under high severity conditions, i.e. a C/O ratio in the range 5 to 10, and with a riser outlet temperature in the range 520°C to 570°C, said process using a unit for treatment of said flue gas with amine, said amine treatment unit using an amine selected from the following group: MEA (monoethanolamine), DEA (diethanolamine), MDEA (dimethylethanolamine), in which process the catalytic cracking unit is equipped with an external exchanger using as the hot fluid a portion of the catalyst removed from the regeneration zone, the heat necessary for the amine treatment unit being supplied integrally by the catalytic cracking unit using steam generated by said external exchanger.

2. An integrated process for capturing CO₂ emitted by the flue gas coming from a FCC unit according to claim 1, in which the proportion of flue gas coming from regeneration in the catalytic cracking unit which is treated by the amine treatment unit is more than 50% by weight.

3. An integrated process for capturing CO₂ emitted by the flue gas coming from a FCC unit according to claim 1, in which the amine treatment unit uses MEA (monoethanolamine).

4. An integrated process for capturing CO₂ emitted by the flue gas coming from a FCC unit according to claim 1, in which the amine treatment unit uses the absorbant compound tetramethylhexane-1,6-diamine, generally known as TMHDA.

5. An integrated process for capturing CO₂ emitted by the flue gas coming from a FCC unit according to claim 1, in which the steam generated in the external exchanger associated with the FCC unit is a low pressure steam (less than 8 bars) with a temperature of less than 160°C.

6. An integrated process for capturing CO₂ emitted by the flue gas coming from a FCC unit according to claim 1, in which the flue gas sent to the amine treatment unit comes from a first stage of the regeneration zone of the catalytic cracking unit.

7. An integrated process for capturing CO₂ emitted by the flue gas coming from a FCC unit according to claim 1, in which the flue gas sent to the amine treatment unit comes from the second stage of the regeneration zone of the catalytic cracking unit.

## Patentansprüche

1. Integriertes Verfahren zum Einfangen von CO2, welches durch mindestens einen Teil der Rauchgase emittiert wird, die aus der Regenerationszone einer katalytischen Krackanlage (FCC-Anlage) stammen die einen Kohlenwassrstoffschnitt vom Typ Vakuumdestillat oder atmosphärischer Rückstand mit einem Verkokungsrückstand nach Conradson (CCR) im Bereich zwischen 6 und 10 unter hochstringenten Bedingungen behandelt, das heißt, einem C/O-Verhältnis zwischen 5 und 10, und mit einer Temperatur am Ausgang des Steigrohrs im Bereich zwischen 520°C und 570°C, wobei das Verfahren eine Aminbehandlung der Rauchgase nutzt, bei der die Aminbehandlungseinheit ein Amin verwendet, das aus der folgenden Gruppe ausgewählt ist: MEA (Monoethanolamin), DEA (Diethanolamin), MDEA (Dimethylethanolamin), einem Verfahren, bei dem die katalytische Krackanlage mit einem externen Austauscher ausgestattet ist, der als heißes Fluid einen Teil des Katalysators verwendet, der aus der Regenerationszone entnommen wurde, wobei die Kalorien, die für die Aminbehandlungsanlage erforderlich sind, unter Verwendung des von dem externen Austauscher erzeugten Dampfs ausschließlich durch die katalytische Krackanlage eingebracht werden.

2. Integriertes Verfahren zum Einfangen von CO2, welches durch die Rauchgase einer FCC-Einheit emittiert wird, nach Anspruch 1, wobei der Anteil der aus der Regeneration der katalytischen Krackanlage stammenden Rauchgase, die mit der Aminbehandlungseinheit behandelt werden, größer als 50 Gew.-% ist.

3. Integriertes Verfahren zum Einfangen von CO2, das durch die Rauchgase einer FCC-Einheit ausgestoßen wird, nach Anspruch 1, wobei die Aminbehandlungseinheit MEA (Monoethanolamin) verwendet.

4. Integriertes Verfahren zum Einfangen von CO2, das durch die Rauchgase einer FCC-Einheit ausgestoßen wird, nach Anspruch 1, wobei die Aminbehandlungseinheit die absorbierende Verbindung Tetramethylhexan-1,6-diamin, das allgemein als TMHDA bekannt ist, verwendet.

5. Integriertes Verfahren zum Einfangen von CO2, welches durch die Rauchgase einer FCC-Einheit emittiert wird, nach Anspruch 1, wobei der Dampf, der im externen, mit der FCC-Einheit assoziierten Austauscher erzeugt wird, ein Niederdruckdampf ist (weniger als 8 bar), der eine Temperatur von weniger als 160 °C aufweist.

6. Integriertes Verfahren zum Einfangen von CO2, welches durch die Rauchgase einer FCC-Einheit emittiert wird, nach Anspruch 1, wobei die Rauchgase, die zur Aminbehandlungseinheit geschickt werden, aus der ersten Stufe der Regenerationszone der katalytischen Krackanlage stammen.

7. Integriertes Verfahren zum Einfangen von CO2, welches durch die Rauchgase einer FCC-Einheit emittiert wird, nach Anspruch 1, wobei die Rauchgase, die zur Aminbehandlungseinheit geschickt werden, aus der zweiten Stufe der Regenerationszone der katalytischen Krackanlage stammen.
